Europäisches Patentamt

European Patent Office

Office européen des brevets

(11) Veröffentlichungsnummer: **0 129 536**
**A1**

## (12) EUROPÄISCHE PATENTANMELDUNG

(21) Anmeldenummer: **84890100.5**

(51) Int. Cl.³: **G 01 P 15/08**

(22) Anmeldetag: **30.05.84**

(30) Priorität: 21.06.83 AT 2268/83

(43) Veröffentlichungstag der Anmeldung:
27.12.84 Patentblatt 84/52

(84) Benannte Vertragsstaaten:
BE CH DE FR GB LI LU NL SE

(71) Anmelder: **VOEST-ALPINE Aktiengesellschaft**
**Muldenstrasse 5**
**A-4020 Linz(AT)**

(72) Erfinder: **Gidl, Günter, Dipl.-Ing. Dr.**
**Tegetthofstrasse 26**
**A-4020 Linz(AT)**

(72) Erfinder: **Schönberger, Leopold**
**Neuschönauer-Hauptstrasse 8**
**A-4400 Steyr(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) Beschleunigungsgeber.

(57) Ein Beschleunigungsgeber weist einen an eine Lichtquelle (4) angekoppelten, auslenkbaren Lichtleiter (5) auf, der gegenüber von Fotoelementen (6) angeordnet ist. Um digitale Ausgangssignale zu erhalten, ist ein Schieberegister (8) mit eingangsseitig über ein Übertragungsgatter (9) an je ein Fotoelement (6) angeschlossenen Speicherstellen sowie ein Taktgeber (11) zur Steuerung des Übertragungsgatters (9) und des Schieberegisters (8) vorgesehen. Der Taktgeber (11) ist dabei an einem Taktzähler (14) angeschlossen, der am Eingang eines über ein Vergleichsglied (13) steuerbaren Speichers (15) anliegt, wobei das Schieberegister (8) ausgangsseitig mit dem Vergleichsglied (13) in Verbindung steht.

FIG.2

EP 0 129 536 A1

## Beschleunigungsgeber

Die Erfindung bezieht sich auf einen Be-schleunigungsgeber, bestehend aus einer Licht-quelle, aus der Lichtquelle gegenüberliegenden Fotoelementen, die mit einer Auswerteschaltung verbunden sind, und aus einem an die Lichtquelle angekoppelten, gegen eine Rückstellkraft auslenkbaren Lichtleiter zwischen der Lichtquelle und den Fotoelementen.

Zur Bestimmung einer Beschleunigung ist es bekannt (DE-OS 31 40 584), die durch die Beschleu-nigungskräfte bedingte Auslenkung eines Glasfaser-stabes auszunützen. Zu diesem Zweck ist der an eine Lichtquelle angekoppelte Glasfaserstab im Bereich seines der Lichtquelle zugekehrten Endes eingespannt, so daß das freie Stabende beim Auf-treten einer Beschleunigung entsprechend ausge-lenkt wird. Zur Anzeige der Auslenkung des Glas-faserstabes sind Fotoelemente vorgesehen, deren lichtbedingte Ladungen eine Auswerteschaltung steuern, die ein beispielsweise für eine Leuchtanzeige ausnützbare Spannungssignal erzeugt. Das Beschleunigungssignal sollte für die Weiterverarbeitung jedoch in vielen Fällen als busfähiges Digitalsignal vorliegen.

Der Erfindung liegt somit die Aufgabe zugrunde, einen Beschleunigungsgeber der eingangs geschilderten Art mit einfachen technischen Mitteln so zu verbessern, daß die durch die Auslenkung des Lichtleiters bestimmten Beschleunigungswerte in einer entsprechenden digitalen Form am Ausgang der Auswerteschaltung zur Verfügung stehen.

Die Erfindung löst die gestellte Aufgabe dadurch, daß die Auswerteschaltung in an sich bekannter Weise wenigstens ein Schieberegister mit eingangsseitig über ein Übertragungsgatter an je ein Fotoelement angeschlossenen Speicherstellen und einen Taktgeber zur Steuerung des Übertragungsgatters und des Schieberegisters aufweist, daß der Taktgeber an einen Taktzähler angeschlossen ist, der am Eingang eines über ein Vergleichglied steuerbaren Speichers anliegt, und daß das Schieberegister ausgangsseitig mit dem Vergleichglied in Verbindung steht.

Durch die mit Hilfe des Übertragungsgatters gesteuerte, gleichzeitige Übertragung der Ladungen der einzelnen Fotoelemente in die Speicherstellen des Schieberegisters können die Ladungen der Fotoelemente am Ausgang des Schieberegisters nacheinander in der Reihenfolge der Anordnung der Fotoelemente abgefragt werden, wie dies bei Bildsensoren von Halbleiterkameras bekannt ist. Damit die durch die Ladungen bestimmten Analogsignale für die Halbleiterkameras jedoch zur digitalen Anzeige eines Beschleunigungsgebers ausgenützt werden können, bei dem die beschleunigungsbedingte Auslenkung eines Lichtleiters durch die Fotoelemente angezeigt werden soll, werden die Steuertakte des Taktgebers für das Schieberegister in einem Taktzähler gezählt, so daß der Zählstand des Taktzählers stets die Ordnungsnummer jenes Fotoelementes angibt, dessen Ladung gerade am Ausgang des Schieberegisters ansteht. Da diese Ordnungsnummer ein Maß für die Lage des Fotoelementes darstellt, kann der Taktzähler für das gewünschte Digitalsignal herangezogen werden. Zu diesem Zweck braucht lediglich der Zähler dann in einen Speicher ausgelesen zu werden, wenn die Ladung am Ausgang des Schieberegisters ein vom fokussierten Lichtstrahl des Lichtleiters getroffenes Fotoelement angibt. Dieses Auslesen des Zählstandes wird durch ein Vergleichglied gesteuert, das die jeweilige Ladung am Ausgang des Schieberegisters überwacht. Das in den Speicher eingelesene Ditigalsignal kann dann über eine übliche Treiberschaltung auf einen Daten-Bus gelegt werden. Ist das Schieberegister ausgelesen, so kann ein neuer Abfragezyklus gestartet werden, indem die Ladungen der Fotoelemente wieder in das Schieberegister übertragen werden und der Zähler auf Null gesetzt wird, um die Schiebetakte für das Schieberegister neu zu zählen.

In der Zeichnung ist der Erfindungsgegenstand beispielsweise dargestellt. Es zeigen

Fig. 1 einen erfindungsgemäßen Beschleunigungsgeber in einem schematischen Schnitt und
Fig. 2 ein Blockschaltbild der Auswerteschaltung.

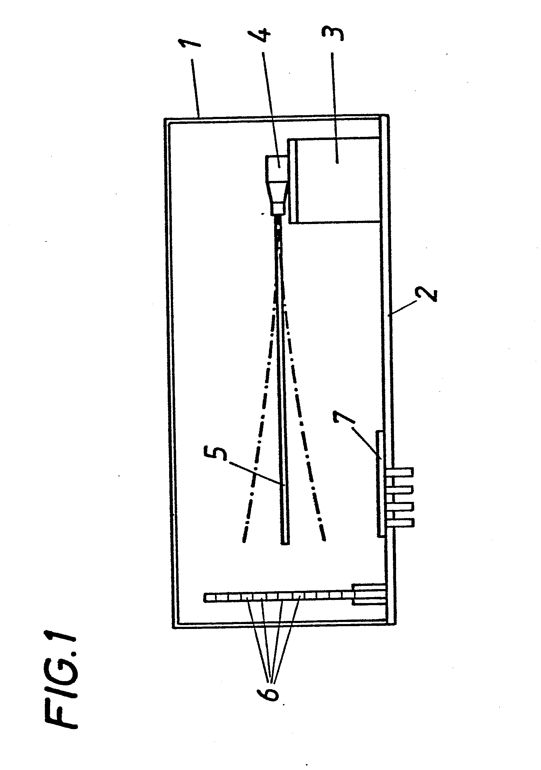

Wie der Fig. 1 entnommen werden kann, ist der Beschleunigungsgeber in einem Gehäuse 1 untergebracht, das beispielsweise mit einer keramischen Trägerplatte 2 versehen ist. Auf dieser Trägerplatte 2 befindet sich ein Sockel 3 mit einer Lichtquelle 4 und einem an die Lichtquelle 4 angekoppelten Lichtleiter 5, der üblicherweise als einseitig eingespannter Glasfaserstab ausgebildet sein wird, so daß er beim Auftreten von Beschleunigungskräften im Bereich seines freien Endes ausgelenkt wird, wie dies in Fig. 1 strichpunktiert angedeutet ist. Gegenüber der Lichtquelle 4, vorzugsweise einer Laser-Diode, sind Fotoelemente 6 in einer vorgegebenen Ordnung vorgesehen, die von dem durch den Lichtleiter 5 fokussierten Lichtstrahl der Lichtquelle 4 getroffen werden und die Auslenkung des Lichtleiters 5 anzeigen, und zwar über eine integrierte Auswerteschaltung 7.

Als Knickschutz für den Lichtleiter 5 können aus Übersichtlichkeitsgründen nicht dargestellte Anschläge vorgesehen sein, die vorteilhaft durch eine entsprechende Ausgestaltung des Gehäuses gebildet werden. Das Gehäuse 1 sollte elektrisch leitend sein, um elektrische Felder abzuschirmen. Durch Änderung der Länge und des Durchmessers des Lichtleiters kann die Empfindlichkeit des Beschleunigungsgebers an verschiedene Meßbereiche angepaßt werden.

Um ein digitales Meßsignal zu erhalten, weist die Auswerteschaltung 7 ein Schieberegister 8 auf, dessen Speicherstellen eingangsseitig mit je einem der Fotoelemente 6 verbunden sind, und zwar über ein Übertragungsgatter 9, das die parallele Übertragung der Ladungen aller Fotoelemente 6 in die diesen Fotoelementen zugeordneten Speicherstellen des Schieberegisters 8 steuert. Zur Steuerung des Übertragungsgatters 9 und des Schieberegisters 8 dient ein von einem Oszillator 10 beaufschlagter Taktgeber 11, der die Schiebetakte für das Schieberegister 8 vorgibt, so daß am Ausgang des Schieberegisters 8 nacheinander die Ladungen der einzelnen Fotoelemente 6 abgenommen werden können. Da es für die Bestimmung der Auslenkung des Lichtleiters 5 lediglich darauf ankommt, daß über die Ladung einesFotoelementes eindeutig erkannt werden kann, ob das zugehörige Fotoelement vom Lichtstrahl des Lichtleiters getroffen wurde oder nicht, genügt es, die am Ausgang anstehende Ladung des Schieberegisters mit einem Schwellwert zu vergleichen. Zu diesem Zweck ist der Ausgang des Schieberegisters 8 über einen Verstärker 12 mit einem entsprechenden Vergleichsglied 13 verbunden.

Zur Bestimmung jenes Fotoelementes, das vom Lichtstrahl des Lichtleiters 5 getroffen wurde, ist der Taktgeber 11 an einen Taktzähler 14 angeschlossen, der die Schiebetakte des Schieberegisters zählt, so daß der Zählstand des Taktgebers 14 die jeweilige Ordnungsnummer des Fotoelementes angibt, dessen Ladung am Ausgang des Schieberegisters 8 abgegriffen werden kann. Wird nun über das Vergleichsglied 13 festgestellt, daß dieses Fotoelement vom Licht-

- 6 -

strahl des Lichtleiters 5 getroffen wurde, so wird über das Vergleichsglied 13 an einen dem Taktzähler 14 nachgeordneten Speicher 15 ein Einlesebefehl gegeben, demzufolge der Zählstand des Zählers 14 in den Speicher 15 übertragen wird. Dieser Zählstand gibt die Ordnungsnummer des vom Lichtstrahl getroffenen Fotoelementes und damit die Auslenkung des Lichtleiters 5 an. Der Zählstand kann somit als Maß für die auftretende Beschleunigung gewertet werden. Um den in digitaler Form im Speicher 15 abgelegten Zählstand an einen Daten-Bus weiterzugeben, kann in üblicher Weise eine Treiberschaltung 16 vorgesehen sein, die durch eine entsprechende Auftastung über den Eingang 17 das Digitalsignal im Speicher 15 auf den Daten-Bus legt.

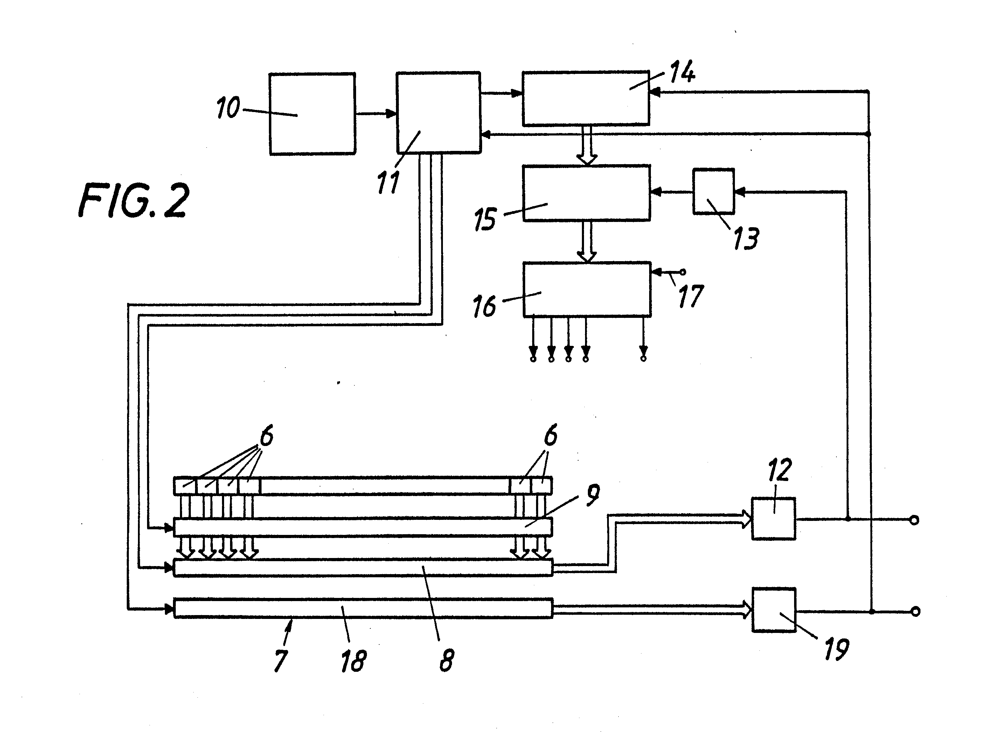

Sind alle Ladungen aus dem Schieberegister 8 ausgelesen, so kann ein neuer Abfragezyklus begonnen werden, indem der Zähler 14 auf Null gesetzt und das Übertragungsgatter 9 im Sinne einer Übertragung der Ladungen der Fotoelemente 6 in das Schieberegister 8 angesteuert wird. Zu dieser Synchronisation des Schieberegisters und des Zählers ist nach dem Ausführungsbeispiel der Fig. 2 ein Schieberegister 18 vorgesehen, das ebenfalls vom Taktgeber 11 getaktet wird und über einen Verstärker 19 am Ende eines Abfragezyklus ein Signal zum Setzen des Zählers 14 sowie zum Ansteuern des Übertragungsgatters 9 über den Taktgeber 11 abgibt.

Infolge der Lichtführung durch den Lichtleiter innerhalb eines geschlossenen Gehäuses tritt ein vergleichsweise scharf abgegrenzter Lichtfleck auf, was den Beschleunigungsgeber weitgehend unkritisch bezüglich der Lichtstärke und damit unabhängig von Versorgungsspannungsschwankungen macht. Erfaßt der Lichtfleck mehr als ein Fotoelement, so wird das in Abtastrichtung vordere Fotoelement ausgewertet. Bei einer einzeiligen Anordnung der Fotoelemente wird ein Beschleunigungsgeber für eine Meßachse erhalten. Bei einer mehrzeiligen Ausführung ist eine Beschleunigungsbestimmung in einer Ebene möglich. Durch eine räumliche Anordnung der Fotoelemente können Beschleunigungswerte auch bezüglich eines dreiachsigen Koordinatensystems erfaßt werden.

Da sich auf Grund der Auslenkung des einseitig eingespannten Lichtleiters 5 ein Nichtlinearitätsfehler ergibt, kann dieser Fehler - soweit er stört - durch einen Rechner genau kompensiert werden. Mit einem Rechner lassen sich aber auch Kennlinienumwertungen des Beschleunigungsgebers sowie Maßstabsumwertungen und Grenzwertbildungen durchführen.

- 9 -

Patentanspruch:

Beschleunigungsgeber, bestehend aus einer Lichtquelle (4), aus der Lichtquelle (4) gegenüberliegenden Fotoelementen (6), die mit einer Auswerteschaltung (7) verbunden sind, und aus einem an die Lichtquelle (4) angekoppelten, gegen eine Rückstellkraft auslenkbaren Lichtleiter (5) zwischen der Lichtquelle (4) und den Fotoelementen (6), dadurch gekennzeichnet, daß die Auswerteschaltung (7) in an sich bekannter Weise wenigstens ein Schieberegister (8) mit eingangsseitig über ein Übertragungsgatter (9) an je ein Fotoelement (6) angeschlossenen Speicherstellen und einen Taktgeber (11) zur Steuerung des Übertragungsgatters (9) und des Schieberegisters (8) aufweist, daß der Taktgeber (11) an einen Taktzähler (14) angeschlossen ist, der am Eingang eines über ein Vergleichsglied (13) steuerbaren Speichers (15) anliegt und daß das Schieberegister (8) ausgangsseitig mit dem Vergleichsglied (13) in Verbindung steht.

FIG.1

-1/2-

0129536

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A,D | DE-A-3 140 584 (CALSPAN CORP.)<br>* Seite 11, Zeile 35 - Seite 12, Zeile 10; Figur 4 * | 1 | G 01 P 15/08 |
| A | EP-A-0 055 530 (TOKYO SHIBAURA DENKI)<br>* Seite 1, Zeilen 5-18; Seite 4, Zeilen 20-29; Figur 1 * | 1 | |
| A | US-A-3 822 362 (WECKLER et al.)<br>* Spalte 3, Zeile 61 - Spalte 4, Zeile 13; Spalte 6, Zeilen 39-46; Figuren 1,3 * | 1 | |

**RECHERCHIERTE SACHGEBIETE (Int. Cl. ³)**

G 01 P
H 04 N

Der vorliegende Recherchenbericht wurde für alle Patentansprüche erstellt.

| Recherchenort | Abschlußdatum der Recherche | Prüfer |
|---|---|---|
| DEN HAAG | 26-09-1984 | HANSEN P. |